# EUROPEAN PATENT APPLICATION

(11) **EP 4 745 538 A1**
(43) Date of publication of application: **20.05.2026**
(21) Application number: 24213886.5
(22) Date of filing: 19.11.2024
(51) Int. Cl.: G01G 19/08

(54) **VEHICLE MASS ESTIMATION**

(71) Applicant: Volvo Truck Corporation, 405 08 Göteborg (SE)
(72) Inventor: PANAHANDEH, Ghazaleh, GÖTEBORG (SE); STORCKENFELDT, Carl, GÖTEBORG (SE); KUMRU, Murat, GÖTEBORG (SE); BURGI, Richard, GÖTEBORG (SE); FAGER, Olle, OLOFSTORP (SE); KARLSSON, Viktor, MÖLNDAL (SE)
(74) Representative: Ström & Gulliksson AB

(57) **Abstract**

A computer-implemented method for dynamic estimation of vehicle mass is disclosed. The method comprises acquiring sensor measurements representing parameters defining a vehicle state, and processing the acquired sensor measurements to estimate one or more vehicle state parameters. The method also comprises forming a vehicle state vector comprising current values of the one or more vehicle state parameters and at least one previous value of at least one of the one or more vehicle state parameters, wherein a current vehicle state is indicated by the current values and one or more previous vehicle states are indicated by the at least one previous value. Furthermore, the method comprises processing the vehicle state vector to provide estimation of vehicle mass, by capturing temporal dependencies between the current and previous vehicle states, and by applying one or more dynamic constraints.

Corresponding computer system, vehicle, computer program product, and non-transitory computer-readable storage medium are also disclosed.

## Description

### TECHNICAL FIELD

The disclosure relates generally to estimation of vehicle parameters. In particular aspects, the disclosure relates to vehicle mass estimation. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It may be beneficial to have an accurate estimation of the total mass of the vehicle (e.g., total mass of the vehicle itself, cargo, passengers, and driver). For example, the total mass of the vehicle may be needed to ensure compliance with legislative regulations.

Thus, there is a need for approaches to estimate vehicle mass.

### SUMMARY

According to a first aspect of the disclosure, a computer system for dynamic estimation of vehicle mass is provided. The computer system comprises processing circuitry configured to acquire sensor measurements representing parameters defining a vehicle state, and process the acquired sensor measurements to estimate one or more vehicle state parameters including vehicle mass, wherein a vehicle state vector comprises current values of the one or more vehicle state parameters and at least one previous value of at least one of the one or more vehicle state parameters, wherein a current vehicle state is indicated by the current values and one or more previous vehicle states are indicated by the at least one previous value, and wherein the processing circuitry is configured to capture temporal dependencies between the current and previous vehicle states, and apply one or more dynamic constraints. The first aspect of the disclosure may seek to provide an estimation of vehicle mass. A technical benefit may include that the vehicle mass is accurately estimated. Alternatively or additionally, a technical benefit may include that the vehicle mass is estimated automatically. Yet alternatively or additionally, a technical benefit may include that dynamic changes of the vehicle mass are captured by the estimation.

According to a second aspect of the disclosure, a vehicle is provided, which comprises the computer system of the first aspect. The second aspect of the disclosure may seek to provide a vehicle with mass estimation functionality. A technical benefit may include that compliance with legislative regulations may be ensured without cumbersome weighing procedures. Alternatively or additionally, a technical benefit may include improved vehicle control.

Optionally in some examples, including in at least one preferred example, the vehicle may further comprise one or more sensors configured to provide the measurements.

According to a third aspect of the disclosure, a computer-implemented method for dynamic estimation of vehicle mass is provided. The method comprises acquiring (by processing circuitry of a computer system) sensor measurements representing parameters defining a vehicle state, and processing (by the processing circuitry) the acquired sensor measurements to estimate one or more vehicle state parameters including vehicle mass, wherein a vehicle state vector comprises current values of the one or more vehicle state parameters and at least one previous value of at least one of the one or more vehicle state parameters, wherein a current vehicle state is indicated by the current values and one or more previous vehicle states are indicated by the at least one previous value, and wherein the processing comprises capturing temporal dependencies between the current and previous vehicle states, and applying one or more dynamic constraints. The third aspect of the disclosure may seek to provide an estimation of vehicle mass. A technical benefit may include that the vehicle mass is accurately estimated. Alternatively or additionally, a technical benefit may include that the vehicle mass is estimated automatically. Yet alternatively or additionally, a technical benefit may include that dynamic changes of the vehicle mass are captured by the estimation.

Optionally in some examples, including in at least one preferred example, the parameters defining a vehicle state may further include one or more of: road inclination, longitudinal vehicle acceleration, and longitudinal vehicle velocity. A technical benefit may include that the vehicle state is defined via parameter(s) that are conveniently (e.g., directly) derivable from the sensor measurements. Alternatively or additionally, a technical benefit may include that the vehicle state is defined via parameter(s) that are conveniently (e.g., directly) associated with the vehicle mass.

Optionally in some examples, including in at least one preferred example, the one or more dynamic constraints may represent one or more of: conservation of momentum, conservation of energy, maximum acceleration, minimum acceleration, maximum acceleration rate, minimum acceleration rate, maximum road inclination, minimum road inclination, maximum road inclination rate, minimum road inclination rate, maximum vehicle mass, minimum vehicle mass, maximum air resistance, minimum air resistance, maximum roll resistance, and minimum roll resistance. A technical benefit may include that unrealistic and/or impossible parameter values may be disregarded or suppressed.

Optionally in some examples, including in at least one preferred example, at least one of the one or more dynamic constraints may be implemented by one or more of: weighting vehicle state parameter values dynamically, using dynamic virtual vehicle state parameter values in the state vector, and discarding vehicle state parameter values dynamically. A technical benefit may include convenient implementation of the constraints.

Optionally in some examples, including in at least one preferred example, the processing may comprise using constrained Bayesian estimation. A technical benefit may include convenient implementation of the vehicle mass estimation.

Optionally in some examples, including in at least one preferred example, the estimation of vehicle mass may be provided as a probability distribution over vehicle mass values. A technical benefit may include that an uncertainty of the estimated vehicle mass may be provided.

Optionally in some examples, including in at least one preferred example, the method may further comprise causing (by the processing circuitry) vehicle control based on the estimation of vehicle mass. A technical benefit may include improved vehicle control (e.g., increased safety, decreased wear, decreased power/fuel consumption, increased range, etc.).

According to a fourth aspect of the disclosure, a computer program product is provided, which comprises program code for performing, when executed by the processing circuitry, the method of the third aspect.

According to a fifth aspect of the disclosure, a non-transitory computer-readable storage medium is provided, which comprises instructions, which when executed by the processing circuitry, cause the processing circuitry to perform the method of the third aspect.

The fourth and/or fifth aspect of the disclosure may seek to convey program code for provide an estimation of vehicle mass. A technical benefit may include that new vehicles and/or legacy vehicles may be conveniently configured, by software installation/update, to acquire sensor measurements representing parameters defining a vehicle state, process the acquired sensor measurements to estimate one or more vehicle state parameters, form a vehicle state vector comprising current values of the one or more vehicle state parameters and at least one previous value of at least one of the one or more vehicle state parameters, wherein a current vehicle state is indicated by the current values and one or more previous vehicle states are indicated by the at least one previous value, and process the vehicle state vector to provide estimation of vehicle mass, by capturing temporal dependencies between the current and previous vehicle states, and by applying one or more dynamic constraints.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a flowchart illustrating a method according to some examples.
**FIG. 2** is a schematic drawing illustrating a vehicle according to some examples.
**FIG. 3** is a schematic diagram illustrating a computer system for implementing examples disclosed herein according to some examples.
**FIG. 4** is a schematic drawing illustrating a computer program product in the form of a non-transitory computer-readable storage medium according to some examples.
**FIG. 5** is a schematic block diagram of a control unit according to some examples.

### DETAILED DESCRIPTION

The detailed description set forth below provides information and examples of the disclosed technology with sufficient detail to enable those skilled in the art to practice the disclosure.

As already mentioned, it may be beneficial to have an accurate estimation of the total mass of the vehicle (e.g., total mass of the vehicle itself, cargo, passengers, and driver). For example, the total mass of the vehicle may be needed to ensure compliance with legislative regulations. Alternatively or additionally, the total mass may be used as a parameter for vehicle control (e.g., in vehicle motion management).

The approaches described and exemplified herein provide vehicle mass estimation. According to some examples, the vehicle mass estimation is performed automatically (e.g., without any specific action being taken by an operator of the vehicle). According to some examples, the vehicle mass estimation is performed during use of the vehicle (e.g., while the vehicle is in motion). According to some examples, the vehicle mass estimation is improved compared to other approaches (e.g., in terms of one or more of: accuracy, reliability, availability, robustness, adaptability, etc.).

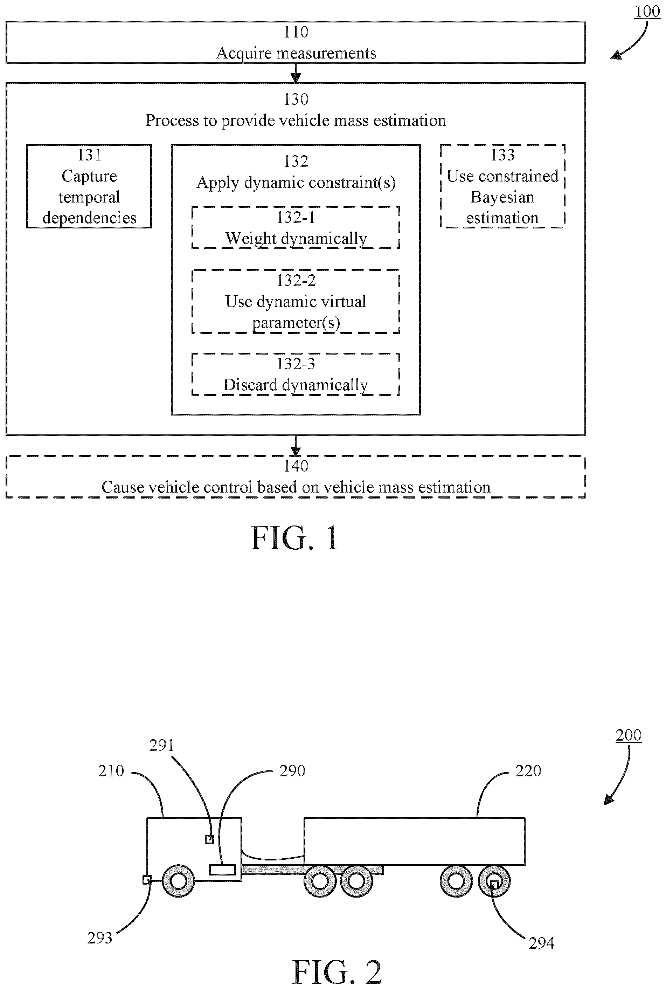

**FIG. 1** illustrates an example method **100** for dynamic estimation of vehicle mass according to some examples. The method **100** may preferably be computer-implemented; for example by processing circuitry of a computer system (e.g., a vehicle control unit - VCU).

As illustrated by **110**, sensor measurements are acquired. Typically, the sensor measurements are acquired by receiving sensor data indicating the sensor measurements from one or more sensors mounted on/within the vehicle.

The sensors may be any suitable sensors. Some typical examples of a suitable sensor include (but are not limited to) an inertial measurement unit (IMU) mounted on/within the body of a vehicle unit (e.g., a tractor unit or a trailer unit), an IMU mounted on/within a wheel of the vehicle, a radar transceiver facing some parts of the surroundings of the vehicle (e.g., a portion of the ground surface), a wheel speed sensor, a wind speed sensor, a wind angle sensor, a force transducer, a torque transducer, an anemometer, a trailer torque sensor (e.g., for an e-trailer), a tire sensor (e.g., measuring tire pressure, tire temperature, tire accelerations, etc.), a trailer articulation angle senor, a coupling force sensor, an axle load sensor, etc.

The sensor measurements may be any suitable sensor measurements. Some typical examples of suitable sensor measurements include (but are not limited to) accelerations (e.g., longitudinal, lateral, vertical), velocities (e.g., longitudinal, lateral, vertical), moments (e.g., roll, pitch, yaw), speeds (e.g., longitudinal, lateral, vertical), wheel speeds (e.g., rotational, lateral) torques, forces, etc. Generally, any measurement possible to achieve through any of the example sensors mentioned herein may be used as a sensor measurement.

The acquired sensor measurements represent parameters defining a vehicle state including vehicle mass. For example, the vehicle state may further define one or more of: a position/orientation of the vehicle, an instantaneous movement of the vehicle, an instantaneous energy of the vehicle, etc.

In addition to the vehicle mass, the parameters defining a vehicle state may comprise any other suitable parameters. Some typical examples of other suitable parameters include (but are not limited to) road inclination, longitudinal acceleration of the vehicle, longitudinal velocity of the vehicle, rolling resistance, air resistance, tire radius, IMU offsets, trailer articulation angle, coupling force(s), e-trailer torque, etc.

As illustrated by **130,** the acquired sensor measurements are processed to estimate one or more vehicle state parameters including the vehicle mass.

For example, some vehicle state parameters may be directly available from the sensor measurements (e.g., road inclination, acceleration, velocity, etc.).

Alternatively or additionally, some vehicle state parameters may be derived from the sensor measurements (e.g., road inclination, acceleration, velocity, rolling resistance, air resistance, tire radius, IMU offsets, trailer articulation angle, coupling force(s), e-trailer torque, mass, etc.).

In some examples, vehicle state parameters may be derived from the sensor measurements by recursive processing (e.g., using the most recent sensor measurement to update a vehicle state parameter to provide a current value of the vehicle state parameter). For example, the update may be carried out in the measurement update step of a standard Bayesian smoother (e.g., Kalman filter, extended/unscented Kalman filter, etc.), and may be achieved by updating the predicted density using the most recent measurement. For instance, a Kalman filter may compute the updated mean value *xₖ* of a vehicle state parameter at sample time *k* as *xₖ = αₖxₖ₋₁* + *βₖyₖ,* where *yₖ* represents the measurement at sample time *k* and *αₖ* and *βₖ* are weighting factors (potentially changing dynamically in time).

In some examples, vehicle state parameters may be derived from the sensor measurements by batch-wise processing (e.g., using a collection of sensor measurements taken at different time instants - for example during a time window including the most recent sensor measurement - to update a vehicle state parameter to provide a current value of the vehicle state parameter). Similarly as mentioned above, the update may be carried out in the measurement update step of a standard Bayesian smoother.

A vehicle state vector may be formed, which comprises current values of a collection of one or more vehicle state parameters and at least one previous value of at least one of the one or more vehicle state parameters in the collection. For example, the vehicle state vector may comprise at least one previous value of each of the one or more vehicle state parameters in the collection.

The at least one previous value of a vehicle state parameter may, for example, comprise the most recent previous value for that vehicle state parameter. Alternatively or additionally, the at least one previous value of a vehicle state parameter may comprise all previous values for that vehicle state parameter within a time window.

In any case, a current vehicle state is indicated by the current vehicle state parameter values and one or more previous vehicle states are indicated by the previous vehicle state parameter values.

Some example vehicle state vectors *x̅ₖ* include *x̅ₖ =* [*m_{c} m*_{*p*1} ... *mₚₙ*]*, x̅ₖ =* [*m_{c} m*_{*p*1} ... *mₚₙ RI_{c} RI*_{*p*1} ... *RIₚₙ*], *x̅ₖ* = [*m_{c} m*_{*p*1} ... *mₚₙ v_{c} v*_{*p*1} ... *vₚₙ a_{c} a*_{*p*1} ... *aₚₙ*], and *x̅ₖ =* [*m_{c} m*_{*p*1} ... *mₚₙ v_{c} v*_{*p*1} ... *vₚₙ a_{c} a*_{*p*1} ... *aₚₙ RI_{c} RI*_{*p*1} ... *RIₚₙ*], where m represents vehicle mass, RI represents road inclination, *v* represents longitudinal velocity, a represents longitudinal acceleration, subscript c represents a current value, and subscripts *p*1 ... *pn* represent respective previous values with time indices **1 ...** *n*.

According to some examples, the processing of **130** may comprise using constrained Bayesian estimation, as illustrated by optional **133.** Bayesian estimation in general is well known and will not be elaborated on further herein. For example, the processing by constrained Bayesian estimation may be implemented using a standard Bayesian framework (e.g., taking acquired sensor measurements as inputs and producing estimates of the vehicle state parameters as outputs).

Whether or not Bayesian estimation is used, the estimation of vehicle mass may be provided as a probability distribution over vehicle mass values (e.g., in terms of mean and covariance).

The processing of **130** comprises capturing temporal dependencies between the current and previous vehicle states, as illustrated by **131.** This may be achieved in any suitable way (e.g., by smoothing in the time dimension, temporal filtering, outlier removal, etc.). Some examples include the vehicle state parameters being derived from the sensor measurements by recursive or batch-wise processing as exemplified above.

When Bayesian estimation is used, the temporal dependencies may be captured as part of the Bayesian estimation.

For applications where it is not strictly required to estimate the vehicle state parameter values instantaneously at the current time, it is possible to employ an appropriate smoother (e.g., Kalman smoother/filter, particle smoother/filter, etc.) to capture temporal dependencies. Generally, any suitable smoothing approach may be used. According to some examples, a fixed-lag smoother may be applied, which may be implemented using any suitable technique. For example, a state vector may be formed that includes the vehicle state parameters as estimated at different times (e.g., *qₖ, qₖ₋₁,* ... where *qₜ* represents the value of vehicle state parameter q as estimated for time t). An advantage of this approach is that, while smoothing of the estimates is achieved, the posterior cross-correlations may also be obtained (i.e., the probability *P*(*qₖ, q*_{*k*-1}*,* ... |measurements)).

The processing of **130** also comprises applying one or more dynamic constraints, as illustrated by **132.** The one or more dynamic constraints may be any suitable dynamic constraint(s). Some typical example representations of dynamic constraints include (but are not limited to) conservation of momentum, conservation of energy, maximum acceleration, minimum acceleration, maximum acceleration rate, minimum acceleration rate, maximum road inclination, minimum road inclination, maximum road inclination rate, minimum road inclination rate, maximum vehicle mass, minimum vehicle mass, maximum air resistance, minimum air resistance, maximum roll resistance, and minimum roll resistance.

When Bayesian estimation is used, the dynamic constraints may be applied as part of the Bayesian estimation; i.e., constrained Bayesian estimation.

When Bayesian estimation is used, dynamic constraints (e.g., equalities and inequalities) may be incorporated using any suitable approach. For example, equality constraints (e.g., conservation of energy) may be enforced by introducing virtual measurements, which treat the constraints as additional observations. Alternatively or additionally, inequality constraints (e.g., minimum and/or maximum value) may be enforced by applying state estimation methods that represent the posterior distribution with particles (e.g., particle filters, unscented/cubature Kalman filters, etc.) and discard or adjust particles that violate the constraints to ensure compliance.

Generally, the application of one or more dynamic constraints may be achieved in any suitable way.

For example, application of a dynamic constraint may be implemented by weighting vehicle state parameter values dynamically, as illustrated by **132-1.** To this end, any suitable weighting approach may be applied. For instance, the weighting may reflect the reliability (e.g., of one or more of: the vehicle state, the vehicle state parameters(s), and the final estimated mass) based on current driving conditions and/or dynamics. In one particular example, the relative error of an acceleration value may be higher for low accelerations than for high accelerations. In one particular example, the air drag coefficient might be hard to estimate at high speeds, so the error of an air drag force value may be higher for high speeds than for low speeds.

Alternatively or additionally, application of a dynamic constraint may be implemented by using dynamic virtual vehicle state parameter values in the state vector (and/or by using virtual measurements), as illustrated by **132-2.** To this end, any suitable virtual state parameter(s) may be applied. For instance, when ranges are set for some vehicle state parameters (e.g., roll resistance and/or air drag), virtual copies of these parameters could be varied only within these ranges to improve the mass estimation.

Yet alternatively or additionally, application of a dynamic constraint may be implemented by discarding vehicle state parameter values dynamically (e.g., when particle filtering is applied, removing particles that violate the constraint), as illustrated by **132-3.**

Yet alternatively or additionally, application of a dynamic constraint may be implemented by truncating the state distribution to reflect the dynamic constraint. For instance, a constrained state estimate may be obtained by computing the statistics (e.g., mean and covariance) of the truncated distribution.

As illustrated by optional **140,** the method **100** may further comprise causing vehicle control based on the estimation of vehicle mass. For example, the estimated mass may be used as an input parameter for one or more automatic functions such as: gear selection, safety braking, cruise control, range estimation, and free roll control. Alternatively or additionally, the estimated mass may be used to ensure compliance with legislative regulations. Yet alternatively or additionally, the estimated mass may be used for load monitoring. Yet alternatively or additionally, an indication of the estimated mass may be rendered via a user interface. Thereby, an operator of the vehicle may conclude whether or not they can travel a weight sensitive road stretch (e.g., including a bridge), and/or which (weight dependent) speed limit is applicable for the vehicle. Yet alternatively or additionally, the estimated mass may be used to automatically limit the vehicle velocity according to a (weight dependent) speed limit.

In some typical examples, the principles described herein may be applied in isolation during one or more specific event(s) (e.g., acceleration using a specific gear). For example, vehicle state estimations for different event types (e.g., use of different gears) may be treated separately when state parameter values and/or vehicle dynamics differ (possibly substantially) between the different event types. The intermediate mass estimations of the separately treated vehicle state estimations may then be combined (e.g., by averaging, filtering, or the like) to provide the vehicle mass estimation.

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **220** in a known manner. The tractor unit **210** and/or the trailer unit(s) **220** may comprise a vehicle control unit (VCU) **290** configured to perform various vehicle control functions, such as vehicle motion management (VMM), etc. Any of one or more VCU(s) **290** may be configured to perform, or cause performance of, the techniques disclosed herein. For example, the VCU **290** may be configured to perform the method **100** of **FIG. 1****.**

Mounted on the vehicle **200**, there are one or more sensor(s) **291, 293, 294** configured to provide sensor measurements. For example, there may be at least one body-mounted IMU **291** (e.g., a single IMU mounted on the body of the tractor unit **210,** or one IMU per vehicle unit **210, 220**). Alternatively or additionally, there may be at least one wheel-mounted IMU **294.** Yet alternatively or additionally, there may be at least one radar transceiver **293** facing a portion of the ground surface.

It should be noted that the schematic vehicle **200** of **FIG. 2** is merely an example, and that the principles described herein are applicable for any suitable vehicle (e.g., a combination vehicle with a tractor and a semitrailer, as well as a rigid vehicle with trailer).

Thus, according to some examples, there is suggested approaches for estimating the mass of a vehicle (e.g., a heavy-duty vehicle, such as a truck) using constrained Bayesian estimation with a "historical" state vector (i.e., a vehicle state vector with current and previous values of vehicle state parameters as exemplified above). By incorporating measurements (e.g., of forces and accelerations) over time, along with previous vehicle state parameter value(s), an accurate and robust mass estimation technique may be provided that considers dynamic constraints and temporal dependencies. Some potential benefits of some examples of this approach include enhanced accuracy and reliability of mass estimation. The improved mass estimation may be used for load monitoring, compliance with weight regulations, optimization of vehicle performance, etc.

A suitable system for implementing some examples comprises sensors for measuring force and acceleration, which are configured for installation in/on a vehicle (e.g., in/on the wheel(s) of the vehicle, in/on the suspension of the vehicle, in/on the propulsion system of the vehicle, etc.). The sensors are typically configured to provide real-time data indicating the dynamic behavior of the vehicle, including forces exerted by the weight of the cargo and the acceleration of the vehicle during various maneuvers.

As already mentioned, the mass estimation may utilize a constrained Bayesian estimation algorithm, which incorporates force and acceleration measurements into the state vector along with previous states. By modelling the vehicle dynamics and enforcing dynamic constraints (e.g., conservation of momentum and energy), the Bayesian estimation algorithm filter dynamically estimates the vehicle mass over time.

The historical state vector maintains a record of previous states, allowing the filter to exploit temporal dependencies in the data and produce smoother, more consistent mass estimates. This enables adaptation to changes in the vehicle dynamics and mitigation of the impact of measurement errors and uncertainties.

Thus, according to some examples, a sequence of noisy measurements, which potentially contain outlier observations, is processed to estimate the vehicle mass in a Bayesian framework. To this end, a mathematical model may be established describing the probabilistic relationship between the measurements and the mass. For example, any uncertainties (e.g., due to sensor imperfections, lack of knowledge related to the vehicle motion, etc.) may be formulated as probability density functions. Then, the probability distribution of the latent mass, conditioned on the available information acquired by measurements, may be determined.

The constraints of the system may be implemented in the Bayesian estimation process in a variety of ways. For example, constraints may be implemented by formulation of virtual measurements corresponding to the constraints and incorporation of these virtual measurements into a measurement update stage. Alternatively or additionally, constraints may be implemented by expressing the vehicle state probability density function using sigma-points (e.g., as in unscented and cubature Kalman filters) and discard points that do not comply with the constraints.

It should be noted that, when the mass estimation is not required to be realized in exact real-time, it is possible to use smoothing techniques which benefit from future observations.

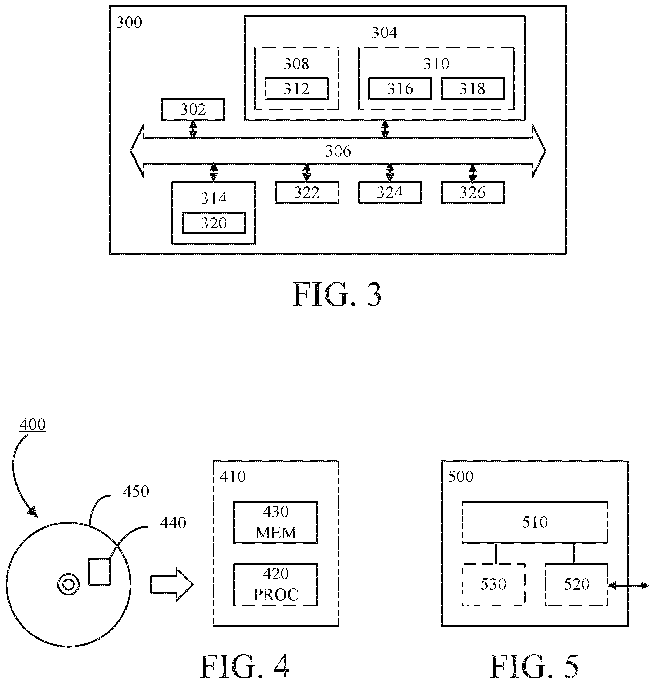

**FIG. 3** is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **302** (e.g., processing circuitry including one or more processor devices or control units), a memory **304,** and a system bus **306.** The computer system **300** may include at least one computing device having the processing circuitry **302.** The system bus **306** provides an interface for system components including, but not limited to, the memory **304** and the processing circuitry **302.** The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302.** A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318.** All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302.** In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302.** The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device
interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 4** illustrates a computer program product **400** exemplified as a non-transitory computer-readable medium in the form of a compact disc (CD) ROM **450.** The computer-readable medium has stored thereon program code **440** comprising instructions. The program code is loadable into processing circuitry (PROC; e.g., a data processing unit) **420,** which may, for example, be comprised in a control unit **410** (e.g., a VCU). When loaded into the processing circuitry, the program code may be stored in a memory (MEM) **430** associated with, or comprised in, the processing circuitry. According to some examples, the program code may, when loaded into, and run by, the processing circuitry, cause execution of method steps according to, for example, any of the methods described herein.

**FIG. 5** schematically illustrates, in terms of a number of functional units, the components of a control unit **500** according to some examples. Processing circuitry **510** is provided using any combination of one or more of a suitable central processing unit CPU, multiprocessor, microcontroller, digital signal processor DSP, etc., capable of executing software instructions stored in a computer program product, e.g. in the form of a storage medium **530.** The processing circuitry **510** may further be provided as at least one application specific integrated circuit ASIC, or field programmable gate array FPGA.

Particularly, the processing circuitry **510** is configured to cause the control unit **500** to perform a set of operations, or steps, such as any of the methods discussed in connection to **FIG. 1****.**

For example, the storage medium **530** may store the set of operations, and the processing circuitry **510** may be configured to retrieve the set of operations from the storage medium **530** to cause the control unit **500** to perform the set of operations. The set of operations may be provided as a set of executable instructions. Thus, the processing circuitry **510** is thereby arranged to execute methods as herein disclosed. In particular, there is disclosed a control unit **500** comprising processing circuitry **510,** an interface **520** coupled to the processing circuitry **510,** and a memory **530** coupled to the processing circuitry **510,** wherein the memory comprises machine readable computer program instructions that, when executed by the processing circuitry, causes the control unit to perform the methods discussed herein.

The storage medium **530** may also comprise persistent storage, which, for example, can be any single one or combination of magnetic memory, optical memory, solid state memory or even remotely mounted memory.

The control unit **500** may further comprise an interface **520** for communications with at least one external device. As such, the interface **520** may comprise one or more transmitters and receivers, comprising analogue and digital components and a suitable number of ports for wireline or wireless communication.

The processing circuitry **510** controls the general operation of the control unit **500,** e.g., by sending data and control signals to the interface **520** and the storage medium **530,** by receiving data and reports from the interface **520,** and by retrieving data and instructions from the storage medium **530.** Other components, as well as the related functionality, of the control node are omitted in order not to obscure the concepts presented herein.

### A non-exhaustive list of examples:

**Example 1:** A computer system for dynamic estimation of vehicle mass, the computer system comprising processing circuitry configured to: acquire sensor measurements representing parameters defining a vehicle state; and process the acquired sensor measurements to estimate one or more vehicle state parameters including vehicle mass, wherein a vehicle state vector comprises current values of the one or more vehicle state parameters and at least one previous value of at least one of the one or more vehicle state parameters, wherein a current vehicle state is indicated by the current values and one or more previous vehicle states are indicated by the at least one previous value, and wherein the processing circuitry is configured to capture temporal dependencies between the current and previous vehicle states, and apply one or more dynamic constraints.

**Example 2:** The computer system of **Example 1**, wherein the parameters defining a vehicle state further include one or more of: road inclination, longitudinal vehicle acceleration, and longitudinal vehicle velocity.

**Example 3:** The computer system of any of **Examples 1-2,** wherein the one or more dynamic constraints represent one or more of: conservation of momentum, conservation of energy, maximum acceleration, minimum acceleration, maximum acceleration rate, minimum acceleration rate, maximum road inclination, minimum road inclination, maximum road inclination rate, minimum road inclination rate, maximum vehicle mass, minimum vehicle mass, maximum air resistance, minimum air resistance, maximum roll resistance, and minimum roll resistance.

**Example 4:** The computer system of any of **Examples 1-3,** wherein at least one of the one or more dynamic constraints is implemented by one or more of: weighting vehicle state parameter values dynamically, using dynamic virtual vehicle state parameter values in the state vector, and discarding vehicle state parameter values dynamically.

**Example 5:** The computer system of any of **Examples 1-4,** wherein capturing temporal dependencies between the current and previous vehicle states comprises one or more of: applying a temporal filter to at least one of the one or more the vehicle state parameters, and removing outliers among the current and previous values for at least one of the one or more the vehicle state parameters.

**Example 6:** The computer system of any of **Examples 1-5,** wherein the processing circuitry is configured to use constrained Bayesian estimation.

**Example 7:** The computer system of any of **Examples 1-6,** wherein the estimation of vehicle mass is provided as a probability distribution over vehicle mass values.

**Example 8:** The computer system of any of **Examples 1-7,** wherein the processing circuitry is further configured to cause vehicle control based on the estimation of vehicle mass.

**Example 9:** A vehicle comprising the computer system of any of **Examples 1-8.**

**Example 10:** The vehicle of **Example 9**, further comprising one or more sensors configured to provide the measurements.

**Example 11:** A computer-implemented method for dynamic estimation of vehicle mass, the method comprising: acquiring (by processing circuitry of a computer system) sensor measurements representing parameters defining a vehicle state; and processing (by the processing circuitry) the acquired sensor measurements to estimate one or more vehicle state parameters including vehicle mass, wherein a vehicle state vector comprises current values of the one or more vehicle state parameters and at least one previous value of at least one of the one or more vehicle state parameters, wherein a current vehicle state is indicated by the current values and one or more previous vehicle states are indicated by the at least one previous value, and wherein processing comprises capturing temporal dependencies between the current and previous vehicle states, and applying one or more dynamic constraints.

**Example 12:** The method of **Example 11**, wherein the parameters defining a vehicle state further include one or more of: road inclination, longitudinal vehicle acceleration, and longitudinal vehicle velocity.

**Example 13:** The method of any of **Examples 11-12**, wherein the one or more dynamic constraints represent one or more of: conservation of momentum, conservation of energy, maximum acceleration, minimum acceleration, maximum acceleration rate, minimum acceleration rate, maximum road inclination, minimum road inclination, maximum road inclination rate, minimum road inclination rate, maximum vehicle mass, minimum vehicle mass, maximum air resistance, minimum air resistance, maximum roll resistance, and minimum roll resistance.

**Example 14:** The method of any of **Examples 11-13,** wherein at least one of the one or more dynamic constraints is implemented by one or more of: weighting vehicle state parameter values dynamically, using dynamic virtual vehicle state parameter values in the state vector, and discarding vehicle state parameter values dynamically.

**Example 15:** The method of any of **Examples 11-14,** wherein capturing temporal dependencies between the current and previous vehicle states comprises one or more of: applying a temporal filter to at least one of the one or more the vehicle state parameters, and removing outliers among the current and previous values for at least one of the one or more the vehicle state parameters.

**Example 16:** The method of any of **Examples 11-15,** wherein the processing comprises using constrained Bayesian estimation.

**Example 17:** The method of any of **Examples 11-16,** wherein the estimation of vehicle mass is provided as a probability distribution over vehicle mass values.

**Example 18:** The method of any of **Examples 11-17,** further comprising causing (by the processing circuitry) vehicle control based on the estimation of vehicle mass.

**Example 19:** A computer program product comprising program code for performing, when executed by the processing circuitry, the method of any of **Examples 11-18.**

**Example 20:** A non-transitory computer-readable storage medium comprising instructions, which when executed by the processing circuitry, cause the processing circuitry to perform the method of any of **Examples 11-18.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (290, 300) for dynamic estimation of vehicle mass, the computer system comprising processing circuitry (302) configured to:
acquire sensor measurements representing parameters defining a vehicle state; and
process the acquired sensor measurements to estimate one or more vehicle state parameters including vehicle mass,
wherein a vehicle state vector comprises current values of the one or more vehicle state parameters and at least one previous value of at least one of the one or more vehicle state parameters,
wherein a current vehicle state is indicated by the current values and one or more previous vehicle states are indicated by the at least one previous value, and
wherein the processing circuitry (302) is configured to capture temporal dependencies between the current and previous vehicle states, and apply one or more dynamic constraints.

2. The computer system (290, 300) of claim 1, wherein the parameters defining a vehicle state further include one or more of: road inclination, longitudinal vehicle acceleration, and longitudinal vehicle velocity.

3. The computer system (290, 300) of any of claims 1-2, wherein the processing circuitry (302) is configured to use constrained Bayesian estimation.

4. The computer system (290, 300) of any of claims 1-3, wherein the processing circuitry (302) is further configured to cause vehicle control based on the estimation of vehicle mass.

5. A vehicle (200) comprising the computer system (290, 300) of any of claims 1-4.

6. The vehicle (200) of claim 5, further comprising one or more sensors (291, 293, 294) configured to provide the measurements.

7. A computer-implemented method (100) for dynamic estimation of vehicle mass, the method comprising:
acquiring (110), by processing circuitry (302) of a computer system (290, 300), sensor measurements representing parameters defining a vehicle state; and
processing (130), by the processing circuitry (302), the acquired sensor measurements to estimate one or more vehicle state parameters including vehicle mass,
wherein a vehicle state vector comprises current values of the one or more vehicle state parameters and at least one previous value of at least one of the one or more vehicle state parameters,
wherein a current vehicle state is indicated by the current values and one or more previous vehicle states are indicated by the at least one previous value, and
wherein the processing (130) comprises capturing (131) temporal dependencies between the current and previous vehicle states, and applying (132) one or more dynamic constraints.

8. The method (100) of claim 7, wherein the parameters defining a vehicle state further include one or more of: road inclination, longitudinal vehicle acceleration, and longitudinal vehicle velocity.

9. The method (100) of any of claims 7-8, wherein the one or more dynamic constraints represent one or more of: conservation of momentum, conservation of energy, maximum acceleration, minimum acceleration, maximum acceleration rate, minimum acceleration rate, maximum road inclination, minimum road inclination, maximum road inclination rate, minimum road inclination rate, maximum vehicle mass, minimum vehicle mass, maximum air resistance, minimum air resistance, maximum roll resistance, and minimum roll resistance.

10. The method (100) of any of claims 7-9, wherein at least one of the one or more dynamic constraints is implemented by one or more of: weighting (132-1) vehicle state parameter values dynamically, using (132-2) dynamic virtual vehicle state parameter values in the state vector, and discarding (132-3) vehicle state parameter values dynamically.

11. The method (100) of any of claims 7-10, wherein the processing (130) comprises using (133) constrained Bayesian estimation.

12. The method (100) of any of claims 7-11, wherein the estimation of vehicle mass is provided as a probability distribution over vehicle mass values.

13. The method (100) of any of claims 7-12, further comprising causing (140), by the processing circuitry (302), vehicle control based on the estimation of vehicle mass.

14. A computer program product (400) comprising program code for performing, when executed by the processing circuitry (302), the method (100) of any of claims 7-13.

15. A non-transitory computer-readable storage medium (450) comprising instructions, which when executed by the processing circuitry (302), cause the processing circuitry to perform the method (100) of any of claims 7-13.

## Amended claims

### Amended claims in accordance with Rule 137(2) EPC.

1. A computer system (290, 300) for dynamic estimation of vehicle mass, the computer system comprising processing circuitry (302) configured to:
acquire sensor measurements representing parameters defining a vehicle state; and
process the acquired sensor measurements to estimate one or more vehicle state parameters including vehicle mass,
wherein a vehicle state vector comprises current values of the one or more vehicle state parameters and at least one previous value of at least one of the one or more vehicle state parameters,
wherein a current vehicle state is indicated by the current values and one or more previous vehicle states are indicated by the at least one previous value, and
wherein the processing circuitry (302) is configured to capture temporal dependencies between the current and previous vehicle states, and apply one or more dynamic constraints representing conservation of momentum and/or conservation of energy.

2. The computer system (290, 300) of claim 1, wherein the parameters defining a vehicle state further include one or more of: road inclination, longitudinal vehicle acceleration, and longitudinal vehicle velocity.

3. The computer system (290, 300) of any of claims 1-2, wherein the processing circuitry (302) is configured to use constrained Bayesian estimation.

4. The computer system (290, 300) of any of claims 1-3, wherein the processing circuitry (302) is further configured to cause vehicle control based on the estimation of vehicle mass.

5. A vehicle (200) comprising the computer system (290, 300) of any of claims 1-4.

6. The vehicle (200) of claim 5, further comprising one or more sensors (291, 293, 294) configured to provide the measurements.

7. A computer-implemented method (100) for dynamic estimation of vehicle mass, the method comprising:
acquiring (110), by processing circuitry (302) of a computer system (290, 300), sensor measurements representing parameters defining a vehicle state; and
processing (130), by the processing circuitry (302), the acquired sensor measurements to estimate one or more vehicle state parameters including vehicle mass,
wherein a vehicle state vector comprises current values of the one or more vehicle state parameters and at least one previous value of at least one of the one or more vehicle state parameters,
wherein a current vehicle state is indicated by the current values and one or more previous vehicle states are indicated by the at least one previous value, and
wherein the processing (130) comprises capturing (131) temporal dependencies between the current and previous vehicle states, and applying (132) one or more dynamic constraints representing conservation of momentum and/or conservation of energy.

8. The method (100) of claim 7, wherein the parameters defining a vehicle state further include one or more of: road inclination, longitudinal vehicle acceleration, and longitudinal vehicle velocity.

9. The method (100) of any of claims 7-8, wherein the one or more dynamic constraints further represent one or more of: maximum acceleration, minimum acceleration, maximum acceleration rate, minimum acceleration rate, maximum road inclination, minimum road inclination, maximum road inclination rate, minimum road inclination rate, maximum vehicle mass, minimum vehicle mass, maximum air resistance, minimum air resistance, maximum roll resistance, and minimum roll resistance.

10. The method (100) of any of claims 7-9, wherein at least one of the one or more dynamic constraints is implemented by one or more of: weighting (132-1) vehicle state parameter values dynamically, using (132-2) dynamic virtual vehicle state parameter values in the state vector, and discarding (132-3) vehicle state parameter values dynamically.

11. The method (100) of any of claims 7-10, wherein the processing (130) comprises using (133) constrained Bayesian estimation.

12. The method (100) of any of claims 7-11, wherein the estimation of vehicle mass is provided as a probability distribution over vehicle mass values.

13. The method (100) of any of claims 7-12, further comprising causing (140), by the processing circuitry (302), vehicle control based on the estimation of vehicle mass.

14. A computer program product (400) comprising program code for performing, when executed by the processing circuitry (302), the method (100) of any of claims 7-13.

15. A non-transitory computer-readable storage medium (450) comprising instructions, which when executed by the processing circuitry (302), cause the processing circuitry to perform the method (100) of any of claims 7-13.
